**Europäisches Patentamt**

**European Patent Office**

**Office européen des brevets**

(19)

(11) Veröffentlichungsnummer: **0 074 572**
**B1**

(12) # EUROPÄISCHE PATENTSCHRIFT

(45) Veröffentlichungstag der Patentschrift:
**19.06.85**

(51) Int. Cl.⁴: **H 01 M 4/16**

(21) Anmeldenummer: **82108095.9**

(22) Anmeldetag: **02.09.82**

(54) **Vorrichtung zum Aufbringen von Geweberöhrchen auf die Füllrohre bei der Herstellung von Röhrchenelektroden für Bleiakkumulatoren.**

(30) Priorität: **08.09.81 DE 3135583**

(43) Veröffentlichungstag der Anmeldung:
**23.03.83 Patentblatt 83/12**

(45) Bekanntmachung des Hinweises auf die Patenterteilung:
**19.06.85 Patentblatt 85/25**

(84) Benannte Vertragsstaaten:
**AT BE CH FR GB LI LU NL SE**

(56) Entgegenhaltungen:
**DE - A - 2 830 888**

(73) Patentinhaber: **F.X. Mittermaier & Söhne Accumulatorenfabrik und Elektrizitätswerk Isen, Am Gries 29, D-8254 Isen (DE)**

(72) Erfinder: **Mittermaier, Xaver, Ing. grad., Am Gries 29, D-8254 Isen (DE)**

(74) Vertreter: **Hain, Leonhard, Dipl.-Ing., Tal 18/IV, D-8000 München 2 (DE)**

## Beschreibung

Die Erfindung betrifft eine Vorrichtung zum Aufbringen von bei der Herstellung von Röhrchenelektroden für Bleiakkumulatoren mit pastenförmiger aktiver Masse zu füllenden Geweberöhrchen auf die zugehörigen Füllrohre, durch die die aktive Masse unter Druck in die Geweberöhrchen eingeführt wird und dadurch diese von den Füllrohren abgezogen werden, wobei zum Aufnehmen der Geweberöhrchen und der Füllrohre Führungszapfen mit einem Führungszylinder für die Geweberöhrchen und einem verkleinerten Aufsteckzylinder für die Füllrohre vorgesehen sind.

Zum Füllen von Röhrchenelektroden mit pastenförmiger aktiver Masse mittels Füllrohre ist es notwendig, die zu einer Gewebetasche zusammengefaßten Röhrchen vorher auf diese Füllrohre aufzubringen. Da die Röhrchen aus flexiblem Gewebe bestehen und ihr Durchmesser möglichst genau auf den Füllrohrdurchmesser abgestimmt sein muß, läßt sich ein reibungsloses Aufziehen der Geweberöhrchen nur mit Hilfe einer Zusatzeinrichtung erreichen. Eine bekannte Einrichtung (DE-PS 2 830 888) dieser Art sieht Führungszapfen vor, deren Führungszylinder mit Paßsitz in je ein Geweberöhrchen einführbar sind, durch diese durchschiebbar und deren verkleinerte Aufsteckzylinder am anderen Ende der Führungszylinder mit Paßsitz in die Füllrohre einsteckbar sind. Mit diesen Führungszapfen lassen sich die Geweberöhrchen ungehindert und schnell auf die Füllrohre aufbringen, weil sie sowohl die Ausrichtung der Füllrohre auf die Geweberöhrchen gewährleisten als auch den Gewebemantel der Röhrchen straffen. Zwar ist es bei Verlängerung der Führungszylinder der Führungszapfen möglich, die durch die Geweberöhrchen durchgeschobenen Führungszylinder zumindest teilweise aus dem offenen Ende der Geweberöhrchen vorstehen zu lassen und darauf schon die nächste Gewebetasche anzusetzen, jedoch lassen sich diese Vorgänge nicht ohne manuelle Einflußnahme ausführen. Dadurch hängt die mit dieser bekannten Einrichtung erreichbare Durchsatzleistung zu sehr von der Geschicklichkeit der Hilfskräfte ab.

Der Erfindung liegt daher die Aufgabe zugrunde, eine Vorrichtung zum Aufbringen von Gewebetaschen auf die Füllrohre so zu verbessern, daß ein vollmechanischer Ablauf der Vorgänge ermöglicht wird.

Zur Lösung dieser Aufgabe ist eine Vorrichtung der eingangs genannten Art gemäß der Erfindung dadurch gekennzeichnet, daß jeder Führungszapfen von einem Führungsstab getragen ist, der von seiner Halterung mindestens so weit vorsteht, daß ein Geweberöhrchen in seiner vollen Länge über den Führungszapfen darauf aufschiebbar ist, der Führungszapfen an seinem freien Ende außer einem Einführkegel den Aufsteckzylinder vor dem Führungszylinder aufweist und ferner ein dem Führungsstab entlangschiebbarer Mitnehmer zum Abschieben des Geweberöhrchens vorgesehen ist.

Die an Führungsstäben befestigten Führungszapfen ermöglichen ein Aufschieben der Geweberöhrchen auf diese Stäbe und damit in eine Überschubstellung auf die Füllrohre. Die Führungsstäbe mit den Führungszylindern lassen sich nun mechanisch bewegen, weshalb sämtliche Vorgänge sich jetzt in einfacher Weise mechanisieren und automatisieren lassen, wodurch auch die Arbeitsleistung wesentlich gesteigert werden kann.

Weitere Merkmale der Erfindung sind in den Unteransprüchen erwähnt.

Die Erfindung wird nachfolgend anhand eines Ausführungsbeispieles, das auch in der Zeichnung schematisch dargestellt ist, näher beschrieben. Es zeigt

Fig. 1 eine Seitenansicht der Vorrichtung in Ausgangsstellung,

Fig. 2 die gleiche Ansicht, jedoch mit aufgebrachtem Geweberöhrchen,

Fig. 3 die gleiche Ansicht in Überschiebstellung,

Fig. 4 einen Längsschnitt durch einen anderen Führungszapfen, vergrößert,

Fig. 5 einen Schnitt nach der Linie V-V der Fig. 4,

Fig. 6 einen Längsschnitt durch einen weiteren Führungszapfen vergrößert und

Fig. 7 einen Schnitt nach der Linie VII-VII der Fig. 6.

Bei der dargestellten Vorrichtung ist je ein Führungszapfen 1 für je ein Geweberöhrchen 10 am Ende eines Führungsstabes 2 befestigt. Dieser Führungsstab ist in einem Traglager 3 verschiebbar geführt und mit seinem hinteren Ende in einem Schieber 5 gelagert. Dieser Schieber 5 kann mittels einer Druckfeder 6 gegenüber dem Traglager 3 abgestützt sein. Dem Führungsstab 2 entlang ist ferner ein Mitnehmer 8 verschiebbar, der beim Ausführungsbeispiel vom Führungsstab durchsetzt wird und eine Zentriervertiefung 9 aufweist. An der Spitze ist der Führungszapfen 1 zu einem Einführkegel 11 ausgebildet, der über einen Aufsteckkonus 12 in einen Führungszylinder 13 übergeht, an den sich ein Verjüngungskegel 14 zum Führungsstab 2 anschließt. Der Führungszylinder 13 ist auf Paßsitz dem Innendurchmesser des Geweberöhrchens 10 angepaßt.

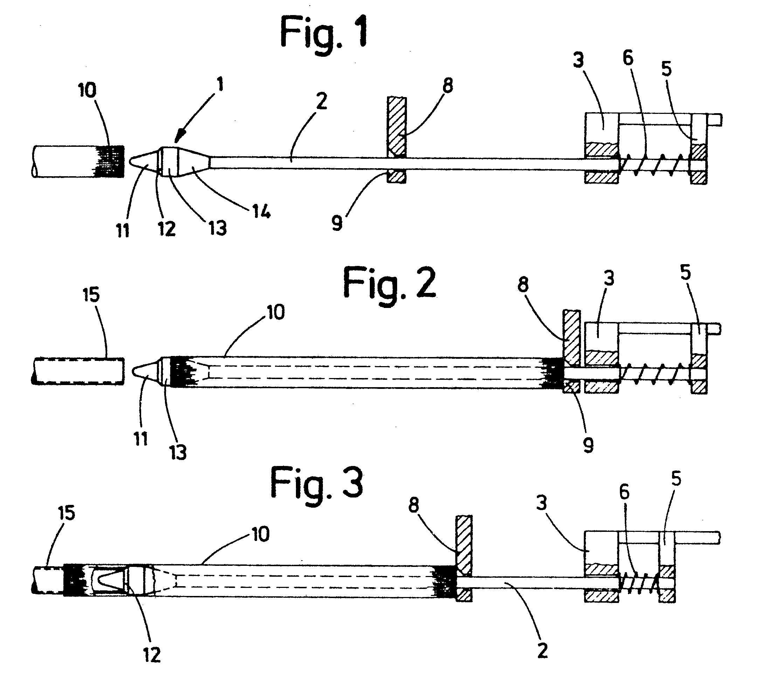

Ist nun eine zu füllende Gewebetasche aus einer Vielzahl von Geweberöhrchen 10 in geeigneter Weise (nicht dargestellt) vor die Führungszapfen 1, die in der Anzahl und im Abstand der Gewebetaschenröhrchen vorhanden sind, gebracht worden, dann wird die Gewebetasche über die Führungszapfen 1 auf die Führungsstäbe 2 so aufgeschoben, daß die Röhrchenenden etwa in der Mitte der Führungszylinder 13 (Fig. 2) festsitzen. Dabei wird der Mitnehmer 8 durch die Röhrchen zurückgeschoben. Die Zentriervertiefung 9 kann dabei die anstoßenden Röhrchen in Stellung halten. Die Führungszapfen 1 mit den aufgeschobenen Geweberöhrchen werden dann vor die Füllrohre 15 gebracht, worauf der Schieber 5 entgegen oder mit dem Traglager 3 vorgefahren wird, um die Führungszapfen in die Füllrohre einzufahren und an ihren Aufsteckkonus zu zentrieren (Fig. 3). Ist diese Überschiebstellung erreicht, setzt sich der Mitnehmer 8 in Bewegung und schiebt die Geweberöhrchen 10 auf die Füllrohre 15. Die Aufschiebebewegung des Mitnehmers ist dabei so begrenzt, z. B. durch Anschlag seiner Zentriervertiefung 9 am Verjüngungskegel 14 des Führungszapfens, daß die Geweberöhrchen ein ausreichendes Stück von den Füllrohren abstehen, damit diese freien Enden die Sockel der noch einzuschiebenden Bleistäbe (nicht dargestellt) aufnehmen können, sobald die Führungszapfen in ihre Ausgangsstellung zurückgebracht und dadurch von den Füllrohren wieder getrennt worden sind. Aus den freigegebenen Füllrohren kann jetzt die aktive Masse in die durch die Bleistäbe-Sockeln abgeschlossenen Geweberöhrchen gepreßt werden, die dadurch von den Füllrohren abgezogen werden.

Das beschriebene Ausführungsbeispiel befaßt sich im wesentlichen nur mit dem Zusammenwirken der Führungszapfen mit den Geweberöhrchen bzw. den Füllrohren. Dazu können die einzelnen Bewegungen unterschiedlich ablaufen, die ohne weiteres einer vollmechanischen Betätigung und schließlich auch einer automatischen Steuerung zugänglich sind. Es ist möglich, das Aufbringen der Geweberöhrchen an einer selbständigen Vorrichtung zu verwirklichen, die unabhängig von weiteren Vorgängen arbeitet, oder diese Einrichtungen können auch in eine Gesamtanlage zum Herstellen von Röhrchenelektroden eingebaut sein, wobei dann die Anschlußvorgänge ebenfalls mechanisch ausgeführt werden können.

Falls die Füllrohre 15 stationär, z. B. an einer Presse, angeordnet sind, muß die Vorrichtung mit den Führungszapfen beweglich sein, und zwar zwischen einer Röhrchenaufschiebestellung (Fig. 1) und einer Röhrchenabschiebestellung (Fig. 2 und 3). Die bewegliche Vorrichtung kann dabei zwischen diesen Stellungen hin und her verschiebbar und dazu entsprechend gelagert sein. Andererseits können auch zwei oder mehrere Sätze von Führungszapfen für mehrere Gewebetaschen vorgesehen sein, die in einer Umlaufbewegung nacheinander die verschiedenen Stellungen passieren.

Sind andererseits die Füllrohre beweglich, zum Beispiel mittels eines Dreh- oder Revolverkopfes mit zwei oder mehreren auf den Drehkreis verteilten Füllrohrsätzen, dann kann die Führungszapfenvorrichtung auch stationär angeordnet sein. Die Gewebetaschen müßten dann zu der Zeit antransportiert werden, zu der die Füllrohre aus der Abschiebestellung weggedreht sind. Auch in diesem Falle würden zwei oder mehrere Vorrichtungen zur Beschleunigung der Vorgänge beitragen.

Sind die Führungsstäbe 2 genügend weit verschiebbar, z. B. mit dem Traglager 3, so besteht auch die Möglichkeit, die Führungszapfen 1 in stationär, z. B. in einem Magazin gelagerte Geweberöhrchen einzuschieben, worauf die Führungszapfen mit der aufgenommenen Gewebetasche vor die Füllrohre gebracht werden.

Wie sämtliche Führungsstäbe eines Satzes an einem Schieber 5 gelagert sein können, so können auch die Mitnehmer 8 zusammengefaßt sein. Andererseits können auch ein oder zwei einzelne Mitnehmer in der Lage sein, eine Gewebetasche mit vielen Geweberöhrchen abzuschieben. Die zwischen Traglager 3 und Schieber 5 vorgesehene Feder 6 kann auch die Aufgabe haben, den Führungszapfen-Ansatz an den Füllrohren elastisch nachgiebig zu gestalten, damit sich die Berührungssitze besser einander anpassen können. Ein Traglager 3 ist dann entbehrlich, wenn der Schieber ausreichend dimensioniert ist, die Führungsstäbe allein zu halten und zu führen.

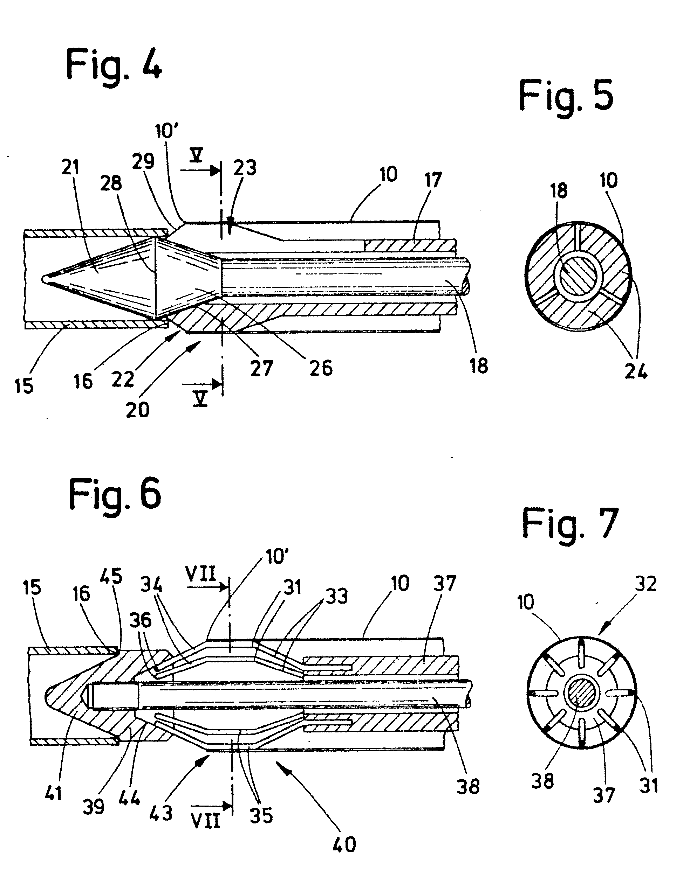

Bei einer Magazinbevorratung der Gewebetaschen- bzw. Röhrchen 10 kann es vorkommen, daß die in die Geweberöhrchen eingefahrenen Führungszapfen 1 zu geringen Reibungswiderstand bieten, um die aufgeschobenen Röhrchen ohne Verrutschen aus ihrer Aufschubstellung aus dem Magazin od. dgl. Lagerstapel herauszuholen. Um diese Gefahr zu beseitigen, sieht die Erfindung sogenannte Spreiz-Führungszapfen 20, 40 vor. Gemäß Fig. 4 besteht der Führungszapfen 20 aus einem federnden aus Segmenten 24 gebildeten Führungszylinder 23, der von einem hohlen Führungsstab 17 getragen ist und aus einem am Ende eines Innenstabes 18 angebrachten Spreizkegel 26, der an die Konusflächen 27 der Zylindersegmente 24 anliegt. Das Vorderende des Spreizkegels bildet den Einführkegel 21, dessen größte Scheitelkante 28 zusammen mit den an den Segmenten 24 angeformten Schrägflächen 29 den Aufsteckkonus 22 bildet. Wird dieser Spreiz-Führungszapfen 20 mit Hilfe des Führungsstabes 17 in ein Geweberöhrchen 10 eingeschoben, bis dieses mit seinem Füllende 10′ auf dem Führungszylinder 23 sitzt (Fig. 4), dann wird kurz vor oder gleichzeitig mit der Rückzugsbewegung des Führungsstabes 17 auch der Spreizkegel 26 zum Spreizen der Zylindersegmente 24 zurückgezogen, so daß dieser Spreiz-Führungszylinder das Röhrchenende einspannt und das Röhrchen bzw. die gesamte Gewebetasche auch entgegen größere Widerstände auf seiner Rückzugsbewegung in die Stellung der Fig. 2 mitnimmt. Um die Spreizstellung des Führungszapfens zu lösen, braucht nur der Spreizkegel 26 etwas vorgeschoben zu werden und die Zylindersegmente 24 können sich in die Ausgangsstellung zurückbewegen. Wird schließlich zum Überschieben des Geweberöhrchens auf ein Füllrohr 15 der Führungszapfen 20 mit seinem Einführkegel 21 in dieses Füllrohr eingefahren, dann kann der Anschlag des Füllrohrendes 16 an die Schrägflächen 29 noch eine zusätzliche Verkleinerung des Führungszylinder-Durchmessers bewirken.

Ein weiterer Spreiz-Führungszapfen 40 ist in den Fig. 6 und 7 dargestellt. Ein hohler Führungsstab 37 trägt diesmal an seinem Ende auf den Umfang gleichmäßig verteilte Federstäbe 31, die einen Spreizkorb 32 mit entsprechend abgewinkelten Schrägstücken 33 und 34 bilden. Die am weitesten ausgestellten, zueinander parallelen Mittelstücke 35 dieser Federstäbe ersetzen den Führungszylinder 43. Die freien Enden 36 der Federstäbe 31 sind zur Vergrößerung oder Verkleinerung des Durchmessers dieses Führungszylinders 43 beweglich. In ihrer Ausgangsstellung nehmen die Federstäbe ihre äußere Spreizstellung ein, in der das aufgeschobene Geweberöhrchen 10 verspannt und festgehalten wird. Um diese Spreizstellung zu lockern, beispielsweise zum Auf- und Überschieben des Geweberöhrchens, wird mittels des Innenstabes eine Entspannkappe 39 mit einem Entspannkonus 44 gegen die Federstäbe bewegt, wodurch die Schräg- und Mittelstücke 34 und 35 zusammengedrückt werden, so daß dieser so verkleinerte Führungszylinder vom Geweberöhrchen leicht überwunden werden kann. Ist an der Spannkappe 39 am Ende des Einführkegels 41 eine Anschlagschulter 45 für das Ende 16 eines Füllrohres 15 ausgebildet, dann kann auch mit dem Füllrohr 15 die Spannkappe auf die Federstäbe aufgeschoben werden.

Wenn bei den vorbeschriebenen Ausführungsformen davon ausgegangen wird, daß die Innenstäbe 18, 38 zwangsweise bewegt werden um die gewünschte Spreiz- oder Entspannstellung zu erhalten und ein Füllrohr-Anschlag nur zur zusätzlichen Einwirkung dient, so schließt dies nicht aus, diesen Füllrohr-Anschlag so zu verstärken, daß allein dadurch eine ausreichende Entspannung des Führungszylinders 23 bzw. 43 erreicht wird. Ein Antrieb des Innenstabes 18 bzw. 38 kann dann in diesem Falle weitgehend entfallen.

Arbeitet die Vorrichtung mit Gewebetaschen, dann genügt es in der Regel nur einen oder die beiden Rand-Führungszapfen eines Satzes mit einer Spreizeinrichtung auszurüsten, um die sichere Mitnahme der Gewebetaschen zu gewährleisten.

## Patentansprüche

1. Vorrichtung zum Aufbringen von bei der Herstellung von Röhrchenelektroden für Bleiakkumulatoren mit pastenförmiger aktiver Masse zu füllenden Geweberöhrchen (10) auf die zugehörigen Füllrohre (15), durch die die aktive Masse unter Druck in die Geweberöhrchen eingeführt wird und dadurch diese von den Füllrohren abgezogen werden, wobei zum Aufnehmen der Geweberöhrchen (10) und der Füllrohre (15) Führungszapfen (1, 20, 40) mit einem Führungszylinder (13, 23, 43) für die Geweberöhrchen und mit einem verkleinerten Aufsteckzylinder für die Füllrohre vorgesehen sind, dadurch gekennzeichnet, daß jeder Führungszapfen (1, 20, 40) von einem Führungsstab (2, 17, 37) getragen ist, der von seiner Halterung mindestens so weit vorsteht, daß ein Geweberöhrchen (10) in seiner vollen Länge über den Führungszapfen (1, 20, 40) darauf aufschiebbar ist, der Führungszapfen an seinem freien Ende außer einem Einführkegel (11, 21, 41) einen Aufsteckkonus (12, 29, 45) vor dem Führungszylinder (13, 23, 43) aufweist und ferner ein dem Führungsstab (2, 17, 37) entlangschiebbarer Mitnehmer (8) zum Abschieben des Geweberöhrchens (10) vorgesehen ist.

2. Vorrichtung nach Anspruch 1, dadurch gekennzeichnet, daß der Führungsstab (2) in einem in Stablängsrichtung beweglichen Schieber (5) gelagert ist.

3. Vorrichtung nach Anspruch 1 oder 2, dadurch gekennzeichnet, daß der Schieber (5) um mindestens die Geweberöhrchenlänge verschiebbar ist.

4. Vorrichtung nach einem der Ansprüche 1 bis 3, dadurch gekennzeichnet, daß daß der Schieber (5) mittels einer Druckfeder (6) in seine Ausgangsstellung zurückführbar ist.

5. Vorrichtung nach einem der Ansprüche 1 bis 4, dadurch gekennzeichnet, daß sämtliche einer Gewebetasche zugeordneten Führungsstäbe (2) an einem einzigen Schieber (5) gelagert sind.

6. Vorrichtung nach einem der Ansprüche 1 bis 5, dadurch gekennzeichnet, daß der Mitnehmer (8) in seiner Abschiebebewegung durch einen Verjüngungskegel (14) des Führungszapfens (1) begrenzt ist.

7. Vorrichtung nach einem der Ansprüche 1 bis 6, dadurch gekennzeichnet, daß von den einer Gewebetasche zugeordneten Führungszapfen (1) mindestens einer einen im Durchmesser spreiz- und/oder entspannbaren Führungszylinder (23, 43) aufweist

8. Vorrichtung nach Anspruch 7, dadurch gekennzeichnet, daß der Führungszylinder (23) aus in radialer Richtung federnd beweglichen Zylindersegmenten (24) besteht, die auf ihrer Stirnseite mit Konusflächen (27) versehen sind und ein auf diese Konusflächen einwirkender Spreizkegel (26) gegenüber dem Führungszylinder (23) zum Spreizen oder Entspannen der Zylindersegmente (24) längsverschiebbar ist.

9. Vorrichtung nach Anspruch 7, dadurch gekennzeichnet, daß der Führungszylinder (43) von korbförmig angeordneten Federstäben (31) gebildet ist, deren stirnseitigen Schrägstücken (34) eine zum Entspannen der gespreizten Federstäbe mit einem Entspannkonus (44) ausgerüstete Entspannkappe (39) zugeordnet ist, die im Führungsstab (37) längsverschiebbar gelagert ist.

10. Vorrichtung nach einem der Ansprüche 7 bis 9, dadurch gekennzeichnet, daß die zum Spreizen oder Entspannen des Führungszylinders (23, 43) vorgesehenen Einrichtungen, wie Spreizkegel (26) oder Entspannkappe (39), zwangsweise zu betätigen sind.

11. Vorrichtung nach einem der Ansprüche 7 bis 10, dadurch gekennzeichnet, daß an den zum Entspannen des Führungszylinders (23, 43) vorgesehenen Einrichtungen, wie Zylindersegmente (24) oder Entspannkappe (39), eine Anschlagschulter (29) bzw. (45) für das zum Überschieben eines Geweberöhrchens (10) bereitgestellte und zum Betätigen der Entspanneinrichtung bestimmte Füllrohr (15) ausgebildet ist.

## Claims

1. Apparatus for placing woven tubes (10) which are to be filled with paste-like active material in the manufacture of tubular electrodes of lead accumulators onto their pertaining filling tubes (15) through which the active material is pressed into the woven tubes which are thus being stripped off the filling tubes, the apparatus providing guide pins (1, 20, 40) for taking up the woven tubes (10) and the filling tubes (15), comprising a guide cylinder (13, 23, 43) for the woven tubes and a reduced slip-on cylinder for the filling tubes, characterized in that each guide pin (1, 20, 40) is mounted on a guide rod (2, 17, 37) protruding at least so far over its support that a woven tube (10) in its full length can be slipped on the guide pin (1, 20, 40), that the guide pin has at its free end a pilot taper (11, 21, 41) and a slip-on cone (12, 29, 45) in front of the guide cylinder (13, 23, 43) and that furthermore a driving pin (8) being movable along the guide rod (2, 17, 37) for slipping off the woven tube (10) is provided.

2. Apparatus according to claim 1, characterized in that the guide rod (2) is supported by a slide (5) which is movable in the longitudinal direction of the rod.

3. Apparatus according to claim 1 or 2, characterized in that the slide (5) is movable by at least the length of the woven tube.

4. Apparatus according to one of the claims 1 to 3, characterized in that the slide (5) is brought back into its starting position by means of a pressure spring (6).

5. Apparatus according to one of the claims 1 to 4, characterized in that all guide rods (2) pertaining to one woven pocket are mounted on one and the same slide (5).

6. Apparatus according to one of the claims 1 to 5, characterized in that the driving pin (8) is restricted in its slip-off movement by the reduced taper (14) of the guide pin (1).

7. Apparatus according to one of the claims 1 to 6, characterized in that at least one of the guide pins (1) of each woven pocket has a guide cylinder (23, 43) which is expandable and/or releaseable in its diameter.

8. Apparatus according to claim 7, characterized in that the guide cylinder (23) consists of cylinder segments (24) being elastically movable in a radial direction and having cone surfaces (27) at their front end and that an expanding taper (26) acting upon these cone surfaces is movable longitudinally relative to the guide cylinder (23) in order to expand or release the cylinder segments (24).

9. Apparatus according to claim 7, characterized in that the guide cylinder (43) consists of spring bars (31) which are arranged in the form of a basket and to the frontal oblique pieces (34) of which a release cap (39) pertains, the latter being equipped with a release cone (44) for releasing the expanded spring bars, the release cap (39) being supported in the guide rod (37) in such a way that it can be moved in the longitudinal direction.

10. Apparatus according to one of the claims 7 to 9, characterized in that the units provided for expanding and releasing the guide cylinder (23, 43), such as the expanding taper (26) or the release cap (39), are actuated by force.

11. Apparatus according to one of the claims 7 to 10, characterized in that at the units provided for relasing the guide cylinder (23, 43), such as the cylinder segments (24) or the release cap (39), a stopping shoulder (29, 45) is formed for the filling tube (15) which is prepared for slipping on a woven tube (10) and defined to actuate the release unit.

## Revendications

1. Dispositif pour enfiler des tubes de tissu (10) sur des conduits de remplissage (15) afin de remplir ces tubes d'une masse active pâteuse lors de la fabrication d'électrodes à tubes pour accumulateurs au plomb, cette masse étant introduite sous pression dans les tubes en tissu à partir desdits conduits, après quoi les tubes sont séparés des conduits, ce dispositif comportant, pour engager les tubes (10) avec les conduits (15) des têtes de guidage (1, 20, 40) pourvues d'un cylindre de guidage (13, 23, 43) pour le tube et d'un cylindre d'introduction, de plus petit diamètre pour le conduit, ce dispositif étant caractérisé en ce que chaque tête de guidage (1, 20, 40) est portée par une tige de guidage (2, 17, 37), montée sur un support et en saillie suffisante par rapport à celui-ci pour permettre d'enfiler un tube de tissu (10) sur toute sa longueur, en coiffant la tête de guidage (1, 20, 40); en ce que la tête de guidage comporte à son extrémité libre un cône d'introduction (11, 21, 41), et un cône d'emboîtement (12, 29, 45) en avant du cylindre de guidage (13, 23, 43); et en ce qu'en outre un poussoir (8) est monté à coulisse sur la tige de guidage (2, 17, 37), pour repousser le tube tissé (10).

2. Dispositif selon la revendication 1, caractérisé en ce que la tige de guidage (2) est fixée à un coulisseau (5) mobile dans le sens de la longueur de la tige.

3. Dispositif selon l'une des revendications 1 ou 2, caractérisé en ce que la course du coulisseau (5) est au moins égale à la longueur du tube tissé (10).

4. Dispositif selon l'une des revendications 1 à 3, caractérisé en ce qu'un ressort de rappel (6) est associé au coulisseau (5), pour le ramener en arrière.

5. Dispositif selon l'une des revendications 1 à 4, caractérisé en ce que toutes les tiges de guidage (2) associées à une même poche de tissu sont montées sur un coulisseau unique (5).

6. Dispositif selon l'une des revendications 1 à 5, caractérisé en ce que la course du poussoir (8) pour repousser le tube tissé (10) est limitée par un cône de raccordement (14) de la tête de guidage (1).

7. Dispositif selon l'une des revendications 1 à 6, caractérisé en ce qu'au moins l'une des têtes de guidage (1) associées à une même poche de tissu comporte un cylindre de guidage (23, 43) pourvu d'un mécanisme d'expansion pour épanouir le cylindre et/ou en réduire le diamètre.

8. Dispositif selon la revendication 7, caractérisé en ce que le cylindre de guidage (23) comporte des segments élastiques (24) mobiles dans le sens radial; ces segments mobiles (24) du cylindre de guidage comportant chacun à leur extrémité antérieure une face conique interne (27), qui coopère avec un cône d'expansion (26) disposé en regard du cylindre de guidage (23); ce cône d'expansion (26) pouvant coulisser dans le sens axial, pour épanouir les segments (24) ou les laisser revenir en position de repos.

9. Dispositif selon la revendication 7, caractérisé en ce que le cylindre de guidage (43) comporte des branches élastiques (31) disposées de manière à constituer une cage; ces branches élastiques ayant chacune vers l'avant une partie oblique (34), adaptée à coopérer avec un chapeau de desserrage (39) pourvu d'une surface conique de desserrage (44), pour amener les branches élastiques (31) en position de desserrage à partir de leur position d'épanouissement, grâce à un mouvement de coulissement d'une tige de manœuvre (18) du chapeau de desserrage (39), montée dans la tige de guidage (37).

10. Dispositif selon l'une des revendications 7 à 9, caractérisé en ce que les mécanismes, notamment à cône d'épanouissement (26) ou à chapeau de desserrage (39), prévus pour mettre le cylindre de guidage (23, 43) en position d'épanouissement ou en position de desserrage, comportent des moyens d'actionnement particuliers.

11. Dispositif selon l'une des revendications 7 à 10, caractérisé en ce qu'il comporte un épaulement d'arrêt (29, 45), disposé sur les organes tels que les segments (24) du cylindre de guidage ou le chapeau de desserrage (39), prévus pour mettre le cylindre de guidage en position de desserrage; cet épaulement d'arrêt (29, 45) étant adapté à recevoir l'extrémité (16) d'un conduit de remplissage (15) sur lequel on enfile l'extrémité d'un tube tissé (10), pour actionner le mécanisme de desserrage du cylindre de guidage, grâce à la poussée exercée par le conduit de remplissage (15).

# Fig. 1

# Fig. 2

# Fig. 3

# Fig. 4

# Fig. 5

# Fig. 6

# Fig. 7